# EUROPEAN PATENT SPECIFICATION

(11) **EP 1 314 904 B1**
(45) Date of publication and mention of the grant of the patent: **27.09.2006**
(21) Application number: 02445150.2
(22) Date of filing: 12.11.2002
(51) Int. Cl.: F16C 35/073

(54) **A method for mounting a sleeve on a shaft and a sleeve device for such mounting**
Verfahren zum Befestigen einer Hülse auf einer Welle und Hülsenvorrichtung für solch eine Befestigung
Procédé de fixation d'une douille sur un arbre et dispositif de douille pour une telle fixation

(30) Priority: 16.11.2001 SE 0103821
(43) Date of publication of application: 28.05.2003
(73) Proprietor: Aktiebolaget SKF, 415 50 Göteborg (SE)
(72) Inventor: Östling, Sture, 641 25 Katrineholm (SE); Axelsson, Uno, 641 35 Katrineholm (SE)
(74) Representative: Westman, Per Börje Ingemar

(56) References cited:
- EP-A- 0 926 370
- EP-A- 0 967 404
- GB-A- 1 015 970
- US-A- 5 011 306

## Description

### Background of the invention

The present invention refers to a sleeve device incorporating an axially, longitudinally split sleeve and it also refers to a method for mounting such a sleeve on a.

Axially split sleeves have since long been used, i.a. for attaching machine members, such as wheels, sprockets and bearing inner rings on shafts or other substantially cylindrical machine elements.

As an example of this is referred to EP-A-0 967 404, in which is shown and described a bearing, which via a split sleeve is attached to a shaft. In this embodiment the outer envelope surface of the sleeve has a generally tapering saw-tooth-shape, although this form is not critical for the present invention, and the sleeve can for instance be a continuously tapering, longitudinally split sleeve. Associated with the sleeve is a flange, having axially extending through-holes each one receiving a set-screw intended to be tightened against a machine member, in the embodiment shown a bearing inner race ring having an inner envelope surface, in order to cause a mutual axial displacement of the machine member and sleeve, thereby causing an increased grip between the shaft, the sleeve and the machine member.

Experience has shown that it is very vital for the performance of the joint, in which order the screws are tightened, as a random tightening, under later rotation will result in vibrations in the sleeve, which are very difficult to handle.

The purpose of the present invention is to suggest a sleeve device intended to be used for mounting a sleeve on a shaft, which will substantially reduce vibrations in the mounted joint during later rotary operation, and this sleeve device is characterized by the features defined in the accompanying claim 1.

The invention also refers to a mounting method, which will substantially reduce vibrations in the mounted joint during later rotary operation, and this has been achieved in accordance with the present invention, in that the method incorporates the steps defined in the accompanying claim sleeve device intended to be used at such mounting and this sleeve device is characterized by the features defined in claim 4.

### Brief description of the drawings

Hereinafter the invention will be further described with reference to embodiments of the mounting sleeve device and method schematically shown in the accompanying drawings.
Fig. 1 shows schematically a bearing unit attached to a shaft by means of a mounting sleeve device according to the present invention.
Fig. 2 shows schematically and in perspective the split sleeve according to the invention and the flange associated thereto.
Fig. 3 is a detail of the sleeve and flange from Fig. 2 in bigger scale.
Fig. 4 is a detail view of a part of sleeve and flange of an alternative embodiment of the sleeve device.
Figs. 5 - 8 illustrate schematically the method for mounting the sleeve device in accordance with the invention.

### Description of the preferred embodiment

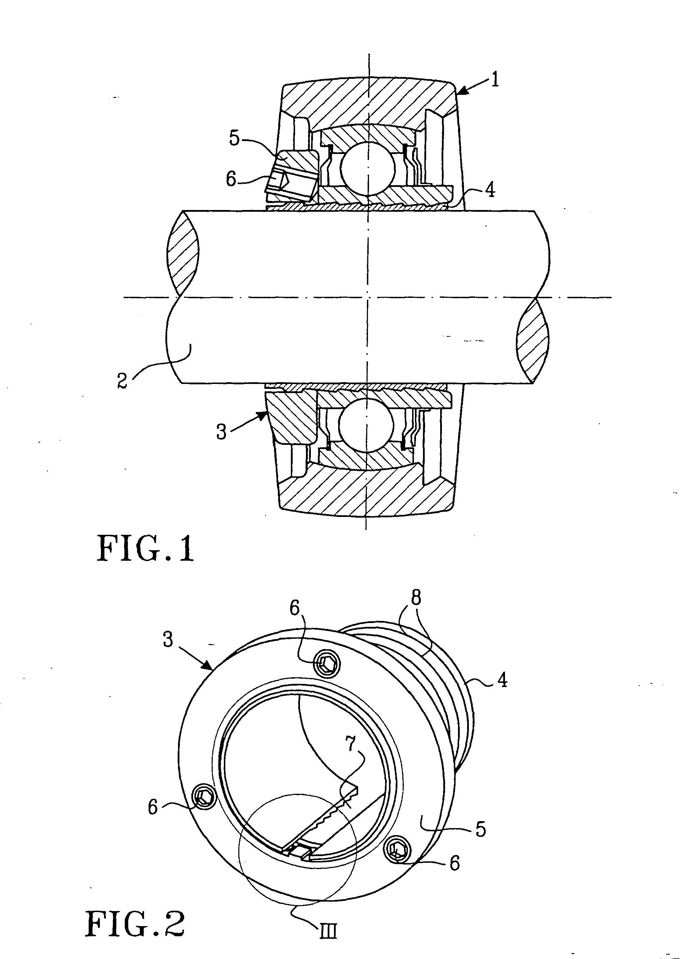

In Fig. 1 is schematically shown in cross-section a so called insert bearing 1 attached to a shaft 2 by means of sleeve device 3 of the type encompassed by the present invention. The arrangement shown in Fig. 1 corresponds to the bearing unit referred to in the above mentioned SE 512 651 C2 and the sleeve device 3 incorporates a sleeve 4, which in the embodiment shown has an outer envelope surface with a number of consecutive saw-tooth-shaped tapering portions, cooperating with complementary formations in the inner surface of the inner bearing ring. Although not visible in this view, the sleeve is split, preferably with an axially extending slot. At one axial end the sleeve 4 is connected to an annular flange 5 having a bigger radial size than the sleeve, and the flange has through-holes for receiving tightening means 6, in form of set-screws, arranged to extend through the bores and at tightening to press against the machine member to be attached to the shaft 2, i.e. the inner ring of the insert bearing 1, thereby causing an axial displacement between inner ring and sleeve 4, which results in an increased grip between shaft, sleeve and inner ring due to the mutual motion of the cooperating tapering surface portions. The cooperating surfaces must not necessarily have a saw-tooth-shape, but each surface can form a single tapering portion, and although the tightening means 6 are shown as set screws extending through bores inclined to the axial direction, it is of course possible that the tightening means can be screws arranged in axially extending bores, or the like.

In Fig. 2 is shown in perspective an embodiment of the sleeve device 3 according to the invention. In this view it is also clearly visible that the sleeve 4 has a longitudinally extending slot 7 and also this embodiment has a series of consecutive saw-tooth-shaped portions 8. The annular flange 5 has three evenly spaced tightening means, or screws 6.

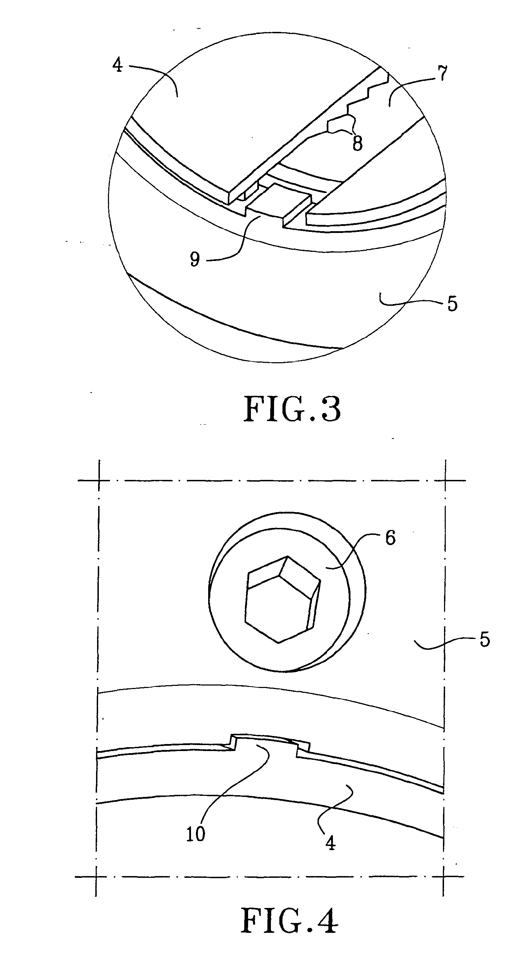

As can be better seen in Fig. 3, which is a detail view in bigger scale of the sleeve device 3 in Fig. 2, the inner edge of the annular flange 5 has a flat nib 9, projecting inwardly and being positioned in the slot 7, thereby limiting the possibility for the sleeve 4 and the flange 5 to move in circumferential direction relative to each other. In this embodiment the flat nib 9 is positioned diametrically opposite to one of the tightening means 6. This means that no one of the three tightening means 6 will be situated at the position of the slot 7.

In Fig. 4 is shown a detail view of an alternative embodiment of the sleeve device in which the sleeve 4 and the flange 5 are prevented from making more than very small mutual movements in circumferential direction by means of a flat nib 10 projecting radially outwardly from the surface of the sleeve 4 and entering in a recess 11 in the inner edge of the annular flange 5. As can also be seen the recess 11 is positioned adjacent one of the tightening means 6.

Although both the shown embodiments of the sleeve device according to the invention have been equipped with interacting means for preventing their free angular movement relative to each other, it is not necessary that such means are provided, although provision of a nib entering into the slot of the sleeve or into a recess in the flange, will facilitate the handling of the sleeve device substantially during mounting operations.

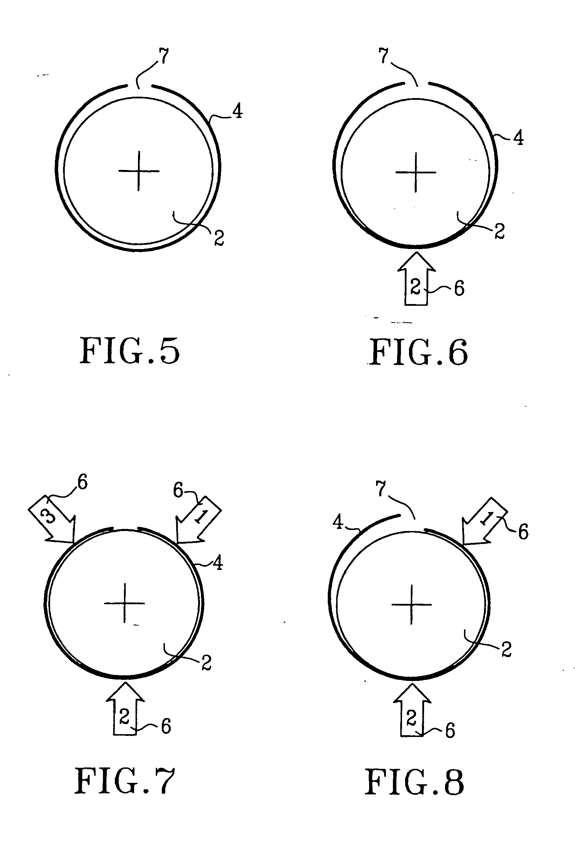

In Figs. 5 - 8 is schematically illustrated four consecutive steps of mounting in accordance with the invention.
Fig. 5 shows the initial position with the shaft 2 in cross section and the sleeve 4 arranged thereabout, with its slot 7 facing upwards.
Fig. 6 illustrates the first step of the mounting operation, whereby the first tightening means 6 is applied at a position substantially diametrically opposite to the slot 7. The tightening means 6 is here illustrated as an arrow marked with a reversed 2, although this mode of illustration is chosen only in order to simplify, and it shall be understood that the tightening means 6 is preferably a set screw as illustrated in Figs. 1 - 4, and having a longitudinal direction substantially in the axial direction of the shaft 2.

In Fig. 7 is shown the next step, whereby a second tightening means 6, marked as arrow 1 is applied. Like in Fig. 6 the arrow represents a set-screw or the like, which is positioned in the same manner as shown e.g. in Fig. 2.

In Fig. 8 finally a third tightening means 6 - arrow 3 - is applied in the same manner, and the mounting is completed.

It has surprisingly proven itself that the severe and very problematic vibrations earlier experienced with a mounting of this kind, when the machine member after mounting was subjected to rotation, has been appreciably reduced when the mounting sequence has been performed in accordance with the steps illustrated in Figs. 5 - 8. This substantially improved effect is also clearly perceptible at high rotational speeds.

The most important step in the mounting method according to the invention is that the first tightening means 6 is applied at a position, which is diametrically opposed to the slot 7 in the split sleeve. The order in which the other two tightening means 6 are applied is not critical, and no provable differences have been found if the tightening means marked arrow 1 or arrow 3 is mounted after the one (arrow reversed 2) provided diametrically opposite to the slot.

The invention incorporates a sleeve 4 and a flange 5 having cooperating means for preventing their mutual angular movement relative to each other except for a very short distance permitted by the play between the cooperating means. By this limited mutual mobility in circumferential direction, it is ascertained that the position of the first tightened means 6 is not by mistake displaced angularly from its desired position opposite to the slot in the sleeve more than a few degrees.

The invention is not limited to the embodiments illustrated and described, but modifications and variants are possible within the scope of the accompanying claims.

## Claims

1. A sleeve device (3) for mounting on a shaft and incorporating an axially, longitudinally split sleeve (4), having a substantially axially extending slot (7), which sleeve is tapering and intended to cooperate with a machine member (1) having a correspondingly tapering bore, and wherein a radially extending annular flange (5) is axially connected to the split sleeve (4) and supports a number of spaced apart tightening means (6), intended to be urged to press against the machine member for mutually displacing the machine member and the sleeve for increasing a grip between shaft (2), split sleeve (4) and machine member (1),
**characterized therein**,
that the split sleeve (4) and the flange (5) have cooperating means (7, 9; 10, 11 ) for preventing their mutual angular movement relative to each other, except for a very short distance permitted by the play between the cooperating means.

2. A sleeve device (3) as claimed in claim 1,
**characterized therein,**
that the cooperating means are a tab (9) projecting radially inwardly from the inner edge of the annular flange (5), and the slot (7) in the split sleeve (4), whereby the tab (9) is arranged to project into the slot (7) thereby preventing relative angular movement between sleeve and flange.

3. A sleeve device as claimed in claim 1,
**characterized therein,**
that the cooperating means are a tab (10) projecting radially outwardly from the outer envelope surface of the split sleeve (4) at a position spaced apart from the slot (7) therein, and a recess (11) in the inner edge of the annular flange (5), whereby the tab (10) is arranged to project into the recess (11) thereby preventing relative angular movement, between sleeve and flange.

4. A method for mounting on a shaft (2), a sleeve device (3) in accordance with claim 1, and incorporating an axially, longitudinally split sleeve (4), having a substantially axially extending slot (7), which sleeve is tapering and intended to cooperate with a machine member (1) having a correspondingly tapering bore, and wherein a radially extending annular flange (5), which is separate from the split sleeve is axially connected to the split sleeve (4) and supports a number of spaced apart tightening means (6), intended to be urged to press against the machine member for mutually displacing the machine member and the split sleeve for increasing a grip between shaft (2) split sleeve (4) and machine member (1),
**characterized therein**,
that in order to achieve as low vibration tendencies in the mounted device, the method incorporates the steps of:
positioning the split sleeve (4) around the shaft (2) with the annular flange (5) positioned with its tightening means against the machine member (1);
tightening a first tightening means (6;2) in a position substantially diametrically opposite to the slot (7) in the split sleeve (4);
thereupon tightening the further tightening means (6;1, 6;3) one by one, and
providing cooperating means (7, 9; 10, 11) for preventing the split sleeve (4) and the flange (5) from mutual angular movement relative to each other, except for a very short distance permitted by the play between the cooperating means.

5. A method as claimed in claim 4,
**characterized therein**,
that three evenly spaced apart tightening means (6) are used.

6. A method as claimed in claim 4 or 5,
**characterized therein**,
that set screws (6) are used as the tightening means.

## Patentansprüche

1. Hülsenvorrichtung (3) zur Montage auf einer Welle, umfassend eine axial in Längsrichtung geschlitzte Hülse (4) mit einem sich im wesentlichen axial erstreckenden Schlitz (7), wobei die Hülse konisch zulaufend ist und zum Zusammenwirken mit einem Maschinenelement (1) mit einer entsprechend konisch zulaufenden Bohrung gedacht ist, und ein sich radial erstreckender ringförmiger Flansch (5) axial mit der geschlitzten Hülse verbunden ist und eine Anzahl beabstandeter Anzugsmittel (6) trägt, die dazu vorgesehen sind, gegen das Maschinenelement angedrückt zu werden, um das Maschinenelement und die Hülse zum Erhöhen eines Halts zwischen der Welle (2), der geschlitzten Hülse (4) und dem Maschinenelement (1) gegeneinander zu verlagern, **dadurch gekennzeichnet, daß** die geschlitzte Hülse (4) und der Flansch (5) zusammenwirkende Mittel (7, 9; 10, 11) zum Verhindern ihrer gegenseitigen Bewegung in Winkelrichtung relativ zueinander aufweisen, mit Ausnahme eines sehr kurzen Wegstückes, das durch das Spiel zwischen den zusammenwirkenden Mitteln zugelassen ist.

2. Hülsenvorrichtung (3) nach Anspruch 1, **dadurch gekennzeichnet, daß** die zusammenwirkenden Mittel ein Vorsprung (9), der sich vom inneren Rand des ringförmigen Flansches (5) radial nach innen erstreckt, und der Schlitz (7) in der geschützten Hülse (4) sind, wobei der Vorsprung (9) derart angeordnet ist, daß er in den Schlitz (7) ragt und **dadurch** eine Relativbewegung in Winkelrichtung zwischen der Hülse und dem Flansch verhindert.

3. Hülsenvorrichtung (3) nach Anspruch 1, **dadurch gekennzeichnet, daß** die zusammenwirkenden Mittel ein Vorsprung (10), der sich von der äußeren Umfangsfläche der geschlitzten Hülse (4) an einer von dem Schlitz (7) in dieser beabstandet liegenden Position radial nach außen erstreckt, und einer Ausnehmung (11) in den inneren Rand des ringförmigen Flansches (5) bestehen, wobei der Vorsprung (10) so angeordnet ist, daß er in die Ausnehmung (11) ragt und **dadurch** eine Relativbewegung in Winkelrichtung zwischen Hülse und Flansch verhindert.

4. Verfahren zur Montage einer Hülsenvorrichtung (3) nach Anspruch 1 auf einer Welle (2), wobei die Hülsenvorrichtung (3) eine axial, in Längsrichtung geschlitzte Hülse (4) mit einem sich im wesentlichen axial erstreckenden Schlitz (7) umfaßt, die Hülse konisch zulaufend und zum Zusammenwirken mit einem Maschinenelement gedacht ist, das eine entsprechend konisch zulaufende Bohrung besitzt, und ein sich radial erstreckender ringförmiger Flansch (5), der getrennt von der geschlitzten Hülse ausgebildet und axial mit der geschlitzten Hülse (4) verbunden ist, eine Anzahl beabstandeter Anzugsmittel (6) trägt, die dazu vorgesehen sind, gegen das Maschinenelement angedrückt zu werden, um das Maschinenelement und die geschlitzte Hülse zum Erhöhen eines Halts zwischen der Welle (2), der geschlitzten Hülse (4) und dem Maschinenelement (1) gegeneinander zu verlagern, **dadurch gekennzeichnet, daß** zum Erreichen möglichst niedriger Vibrationsneigungen in der montierten Vorrichtung das Verfahren die folgenden Schritte umfaßt:
Positionieren der geschlitzten Hülse (4) um die Welle (2), wobei der ringförmige Flansch (5) mit seinen Anzugsmitteln gegen das Maschinenelement (1) positioniert wird;
Anziehen von ersten Anzugsmitteln (6;2) in einer Stellung im wesentlichen diametral entgegengesetzt zu dem Schlitz (7) in der geschlitzten Hülse (4);
daraufhin Anziehen der weiteren Anzugsmittel (6;1,6;3) nacheinander und Vorsehen von zusammenwirkenden Mitteln (7,9;10,11), um die geschlitzte Hülse (4) und den Flansch (5) an einer gegenseitigen Bewegung in Winkelrichtung relativ zueinander zu hindern, mit Ausnahme eines sehr kurzen Wegstückes, das durch das Spiel zwischen den zusammenwirkenden Mitteln zugelassen wird.

5. Verfahren nach Anspruch 4, **dadurch gekennzeichnet, daß** drei gleichmäßig beabstandete Anzugsmittel (6) verwendet werden.

6. Verfahren nach Anspruch 4 oder 5, **dadurch gekennzeichnet, daß** als Anzugsmittel Stellschrauben (6) verwendet werden.

## Revendications

1. Dispositif de douille (3) pour montage sur un arbre et englobant une douille, fendue longitudinalement, axialement (4), ayant une fente s'étendant sensiblement axialement (7), laquelle douille s'effile et est conçue pour coopérer avec un élément de machine (1), ayant un trou qui s'effile en conséquence et dans lequel une flasque annulaire, s'étendant radialement (5), est reliée axialement à la douille fendue (4) et supporte un certain nombre de moyens de serrage espacés (6), conçus pour être poussés pour exercer une pression contre l'élément de machine, pour le déplacement mutuel de l'élément de machine et de la douille, pour accroître une prise entre l'arbre (2), la douille fendue (4) et l'élément de machine (1), **caractérisé en ce que** la douille fendue (4) et la flasque (5) ont des moyens de coopération (7, 9 ; 10, 11), pour empêcher leur déplacement angulaire mutuel, sauf sur une très courte distance, à titre de jeu entre les moyens de coopération.

2. Dispositif de douille (3) selon la revendication 1, **caractérisé en ce que** les moyens de coopération sont une prise (9), faisant saillie radialement à l'intérieur depuis le bord interne de la flasque annulaire (5) et la fente (7) dans la douille fendue (4), moyennant quoi la prise (9) est agencée pour faire saillie dans la fente (7), empêchant par ce moyen un déplacement angulaire relatif entre la douille et la flasque.

3. Dispositif de douille selon la revendication 1, **caractérisé en ce que** les moyens de coopération sont une prise (10); faisant saillie radialement à l'extérieur depuis la surface d'enveloppe externe de la douille fendue, (4), en une position espacée de la fente (7) dans celle-ci et un évidement (11) dans le bord interne de la flasque annulaire (5), moyennant quoi la prise (10) est agencée pour faire saillie dans l'évidement (11), empêchant par ce moyen un déplacement angulaire relatif entre la douille et la flasque.

4. Procédé pour montage sur un arbre (2) d'un dispositif de douille (3) en accord avec la revendication 1 et englobant une douille, fendue longitudinalement, axialement (4), ayant une fente s'étendant sensiblement axialement (7), laquelle douille s'effile et est conçue pour coopérer avec un élément de machine (1), ayant un trou qui s'effile en conséquence et dans lequel une douille annulaire, s'étendant radialement (5), qui est séparée de la douille fendue (4), est reliée axialement à la douille fendue (4) et supporte un certain nombre de moyens de serrage espacés (6), conçus pour être poussés pour exercer une pression contre l'élément de machine, pour déplacer mutuellement l'élément de machine et la douille fendue, pour augmenter une prise entre l'arbre (2), la douille fendue (4) et l'élément de machine (1), **caractérisé en ce qu'**afin de réaliser des tendances aux vibrations les plus faibles possibles dans le dispositif montré, le procédé englobe les étapes consistant à :
- positionner la douille fendue (4) autour de l'arbre (2), avec la flasque annulaire (5) positionnée avec ses moyens de serrage contre l'élément de machine (1) ;
- serrer un premier moyen de serrage (6 ; 2) en une position sensiblement diamétralement opposée à la fente (7) dans la douille fendue (4) ;
- serrer sur ce, les moyens de serrage supplémentaires (6 ; 1, 6 ; 3) un par un et prévoir des moyens de coopération (7, 9 ; 10, 11), pour empêcher la douille fendue (4) et la flasque (5) d'effectuer un déplacement angulaire mutuel, sauf sur une très courte distance, à titre de jeu entre les moyens de coopération.

5. Procédé selon la revendication 4, **caractérisé en ce que** trois moyens de serrage, régulièrement espacés (6) sont utilisés.

6. Procédé selon la revendication 4 ou 5, **caractérisé en ce que** des vis de pression (6) sont utilisées en tant que moyens de serrage.
